# EUROPEAN PATENT SPECIFICATION

(11) **EP 3 403 822 B1**
(45) Date of publication and mention of the grant of the patent: **26.08.2020**
(21) Application number: 16885108.7
(22) Date of filing: 20.12.2016
(51) Int. Cl.: B32B 25/20, B32B 7/10, B32B 9/00, B32B 25/14, B32B 15/06, B32B 15/18, B32B 25/04, B32B 25/08, B32B 27/16

(54) **BONDED SILICONE RUBBER OBJECT**
GEBUNDENES SILIKONKAUTSCHUKOBJEKT
OBJET EN CAOUTCHOUC DE SILICONE LIÉ

(30) Priority: 12.01.2016 JP 2016003783
(43) Date of publication of application: 21.11.2018
(73) Proprietor: Asahi Rubber Inc., Saitama-shi, Saitama 330-0801 (JP)
(72) Inventor: NEMOTO, Masashi, Saitama-shi Saitama 330-0801 (JP); AKAIKE, Hisashi, Saitama-shi Saitama 330-0801 (JP); KANNO, Fumio, Saitama-shi Saitama 330-0801 (JP); GYODA, Kazuki, Saitama-shi Saitama 330-0801 (JP)
(74) Representative: dompatent von Kreisler Selting Werner - Partnerschaft von Patent- und Rechtsanwälten mbB
(86) International application number: PCT/JP2016/087915
(87) International publication number: WO 2017/122506

(56) References cited:
- EP-A1- 2 327 544
- WO-A1-2010/032728
- JP-A- 2007 069 412
- JP-A- 2008 156 592
- JP-B2- 5 557 186
- US-A1- 2009 277 581

## Description

### Technical Field

The present invention relates to a bonded silicone rubber object in which a silicone rubber substrate and an adhered substrate which has a non-glass material having an oxide, a sulfide and a nitride on the bonding surface thereof are bonded via direct bonding.

### Background of the Art

A first substrate made from a polymer resin and a second substrate made from metal, a polymer resin, crosslinked rubber, glass or ceramics, which are different from the polymer resin, have greatly different physical chemical properties respectively. Because they do not have tackiness and adhesiveness, they are not bonded or tacked respectively by only contacting them. Adhesion force via a curable adhesive having fluidity depends on intermolecular force and thus, is extremely weak. Because the suitable adhesive needs to be selected corresponding to materials of the substrates, selection of the adhesive has been required with a trial and error process and has been cumbersome.

In order to tenaciously bond the both substrates by the adhesive, wettability between the adhesive and the substrates is an important factor. The substrates therefore are come into contact each other via the curable adhesive having the fluidity and then the adhesive is cured.

Because the intermolecular force is strongly affected by an atmosphere such as a temperature, humidity and light the adhesion force depending on the adhesive has easily and gradually decreased or lost due to variation of the atmosphere. Since the adhering by the adhesive does not exhibit repeatability, adhered objects having the same characteristics have not been obtained. Qualities of the adhered objects have been varied depending on experience and skill of an adhesive technician. Further, because various factors in a drying process and a curing process are difficulty controlled, the adhering by the adhesive has not been suitable for mass production of the adhered objects. The adhering by the adhesive has been had a problem of low productivity.

A laminated substrate having a non-metal substrate for adhering having a non-metal surface, a metal substrate for adhering having a metal surface covering the non-metal substrate and a silicone rubber adhesive layer sandwiched therebetween is disclosed in Patent Document 1. According to the laminated substrate, the non-metal substrate and the metal substrate are more tenaciously and strongly adhered comparing with the adhering by the adhesive. The non-metal substrate having active silyl groups, which are bonded to dehydrogenation residue groups of hydroxy groups on the non-metal surface via silyl ether bonds, and the metal substrate having the other active silyl groups, which are bonded to dehydration residue groups of hydroxy groups on the metal surface, sandwich the silicone rubber adhesive layer. In the silicone rubber adhesive layer, reactive groups which are capable of bonding to the respective active silyl groups of the both substrates are exposed. The non-metal substrate and the metal substrate are adhered via a bond of the active silyl groups and the reactive groups while sandwiching the silicone rubber adhesive layer.

As just described, the non-metal substrate and the metal substrate of the laminated substrate are indirectly adhered via the silicone rubber adhesive layer. The active silyl groups are bonded to the both substrates through the silyl ether bond. The laminated substrate therefore has a complex structure. Further fabrication of the laminated substrate has been cumbersome and has needed many processes. Improvement of heat resistance, tensile strength and peel strength thereof has been required by properties of a silicone rubber adhesive.

### [Prior Art Document]

### [Patent Document]

[Patent Document 1] Japanese Patent Application Publication No. 2009-56791

### Summary of the Invention

### Problems to be Solved by the Invention

The present invention was made in view of solving the above described problems, and its object is to provide a bonded silicone rubber object which achieves little thermal deterioration and has excellent heat resistance and which suffers neither peeling nor tearing even when stretching is provided by bonding a silicone rubber substrate and an adhered substrate each other far more strongly and tenaciously than conventional ones.

### Means for Solving Problems

A bonded silicone rubber object of the present invention developed to achieve the objects described above comprises a bonded silicone rubber object comprising: a silicone rubber substrate which comprises and configured with silicone rubber, an adhered substrate which comprises and configured with a non-glass material and includes an oxide, a sulfide and/or a nitride exposed on a bonding surface thereof; and the silicone rubber substrate and the adhered substrate which are bonded by direct bonding through ether bonds between hydroxyl groups as reactive functional groups on a surface of the silicone rubber substrate and hydroxyl groups as reactive functional groups on a surface of the oxide, the sulfide and/or the nitride, wherein the non-glass material is at least one of metal, a polymer resin and crosslinked rubber.

In the bonded silicone rubber object, the direct bonding between the silicone rubber substrate and the adhered substrate may comprise a covalent bond.

In the bonded silicone rubber object, the adhered substrate preferably has at least one of an oxide layer, a sulfide layer and/or a nitride layer in the surface thereof, or comprises the oxide, the sulfide and/or the nitride included in a raw material thereof.

In the bonded silicone rubber object, the oxide layer may be at least one selected from the group consisting of a silica film, an alumina film, a titanium oxide film, a zirconium oxide film and a zinc sulfide-silica film; the sulfide layer may be at least one selected from the group consisting of a silicon sulfide film, an aluminum sulfide film, a titanium sulfide film, a zirconium sulfide film and a zinc sulfide film; and the nitride layer may be at least one selected from the group consisting of a silicon nitride film, an aluminum nitride film, a titanium nitride film, a zirconium nitride and a zinc nitride film.

In the bonded silicone rubber object, at least one of the oxide layer, the sulfide layer and the nitride layer may be a vapor deposited film, a sputtered film, an ion-plated film and/or a chemical vapor-phase-deposited film.

In the bonded silicone rubber object, the silicone rubber is preferably at least one of peroxide crosslinked silicone rubber, addition crosslinked silicone rubber, condensation crosslinked silicone rubber and electromagnetic wave crosslinked silicone rubber, or blended rubber of any one the silicone rubbers and olefin rubber.

In the bonded silicone rubber object, the non-glass material may be at least one of metal, a polymer resin, crosslinked rubber and ceramics.

In the bonded silicone rubber object, a bonding surface of the silicone rubber substrate and the bonding surface of the adhered substrate are preferably at least one of a corona discharge treatment surface, a plasma treatment surface, an ultraviolet treatment surface and an excimer treatment surface, respectively.

### Effects of the Invention

According to the bonded silicone rubber object of the present invention, the silicone rubber substrate and the adhered substrate having the oxide layer, the sulfide layer and the nitride layer on the bonding surface or comprising the oxide, the sulfide and/or the nitride therein are strongly bonded by crosslinking via the direct bonding with no dependence on the mutual raw material and properties of these substrates. In addition a curable adhesive having fluidity is not needed.

According to the bonded silicone rubber object, the reactive functional groups which are exposed on the each bonding surface of the silicone rubber substrate and the adhered substrate made from at least one of the metal, the polymer resin, the crosslinked rubber and the ceramics form the direct covalent bond, whereby the silicone rubber substrate and the adhered substrate are bonded therebetween. The direct covalent bond is the ether bond, when the reactive functional groups are the hydroxy groups.

According to the bonded silicone rubber object, because the silicone rubber substrate and the adhered substrate made from the metal, the polymer resin, the crosslinked rubber or the ceramics which are different from the silicone rubber substrate are strongly bonded, peeling in the bonded silicone rubber object is avoided. Further in the bonded silicone rubber object, the silicone rubber substrate and the adhered substrate are bonded therebetween through the direct bond with no dependence on the curable adhesive having the fluidity and thus, a mixture thereof does not protrude from the bonding surface, and the both substrates are not peeled in a cured layer thereof. Furthermore even when the silicone rubber substrate and the adhered substrate have a plain surface or a complex-solid shape, they are strongly bonded.

According to the bonded silicone rubber object, the silicone rubber substrate and the adhered substrate are more strongly and tenaciously bonded by the direct bond therebetween comparing with adhering by intermolecular force of the curable adhesive having the fluidity.

Because bonding of interface of the bonded silicone rubber object only has the direct bonding, the bonded silicone rubber object achieves little thermal deterioration and has excellent heat resistance and which suffers neither peeling nor tearing even when stretching.

The bonded silicone rubber object has high productivity and is exactly manufactured in large quantities even when simple processes.

### Mode for Carrying out the Invention

According to a preferable aspect of a bonded silicone rubber object of the present invention, a silicone rubber substrate comprising silicone rubber and an adhered substrate made from a non-glass material such as a polymer resin material are chemically bonded via a direct ether bond. The adhered substrate has an oxide layer on the bonding surface thereof, whereby oxide molecules or oxide particles are exposed. The direct covalent bond is formed by a dehydration reaction between hydroxy groups, which are reactive functional groups on the silicone rubber substrate, and hydroxy groups which are reactive functional groups on the exposed molecules or the exposed particles of the oxide in the oxide layer.

For example, a surface activation treatment such as a corona discharge treatment, a plasma treatment, an ultraviolet irradiation treatment and an excimer treatment is preliminarily conducted to a lower face of the silicone rubber substrate, and a surface activation treatment such as a corona discharge treatment, a plasma treatment, an ultraviolet irradiation treatment and an excimer treatment is preliminarily conducted to a upper face of the adhered substrate. The hydroxy groups as the reactive functional groups, which are newly generated and amplified, are exposed on the bonding surface. When the bonding surface of the silicone rubber substrate and the bonding surface of the adhered substrate are come into contact by overlapping the both substrates, the hydroxy groups as the reactive functional groups on the both substrates form the direct ether bond by the dehydration therebetween and thus, the both substrates are chemically bonded. Instead of the oxide layer, at least one of a sulfide layer, a nitride layer and a mixture layer of the oxide, the sulfide and/or the nitride may be employed. The silicone rubber substrate may have a plain face shape or a complex-solid shape such as a block shape, a plate shape, a sheet shape, a film shape, a square bar shape, a round bar shape, a sphere shape, a half-sphere shape, a fiber shape and a mesh shape. The silicone rubber substrate is strongly bonded to the adhered substrate with no dependence on the shape thereof.

As long as the adhered substrate made from the non-glass material, it is not restricted. As a material of the adhered substrate, a metal, a polymer resin, crosslinked rubber and ceramics are exemplified besides the polymer resin material.

The metal of raw material of the adhered substrate may be used the following metals. According to a metal classification, a general metal, a functional metal, an amorphous metal, a fiber-reinforced metal block, a shape memory alloy, a super elastic alloy are exemplified. According to a metal shape classification, a plate shape, a sheet shape, a film shape, a square bar shape, a round bar shape, a sphere shape, a half-sphere shape, a fiber shape, a mesh shape, a wire mesh shape and a complex circuit shape thereof, and a punching-fabricated object and a cutting-fabricated object are exemplified. According to the periodic table, at least one of beryllium, magnesium, calcium, strontium, barium, radium, scandium, yttrium, titanium, zirconium, vanadium, niobium, tantalum, chromium, molybdenum, tungsten, manganese, iron, cobalt, rhodium, iridium, nickel, palladium, platinum, copper, silver, gold, zinc, cadmium, mercury, aluminum, germanium, tin, lead, antimony, bismuth and neodymium are exemplified. According to a composition of an alloy, ferrous alloys (steel, carbon steel and cast iron), copper alloys (phosphor bronze, brass, cupronickel, beryllium-copper and titanium-copper), aluminum alloys (alloys of aluminum with at least one of copper, manganese, silicon, magnesium, zinc and nickel), magnesium alloys (Mg/Zn alloy, Mg/Ca alloy), zinc alloys, tin and tin alloys, nickel alloys, gold alloys, silver alloys, platinum alloys, palladium alloys, lead alloys, titanium alloys (an α titanium alloy, a β titanium alloy and an α+β titanium alloy), cadmium alloys, zirconium alloys, cobalt alloys, chrome alloys, molybdenum alloys, tungsten alloys, manganese alloys, ferritic stainless steel, martensitic stainless steel, austenitic stainless steel, precipitation strengthened stainless steel, a nickel-titanium alloy, an iron-manganese-titanium alloy and a super elastic alloy (a nickel-titanium alloy) are exemplified. The adhered substrate may have a plain face shape or a complex-solid shape. The adhered substrate is strongly bonded to the silicone rubber substrate with no dependence on the shape thereof.

As the polymer resin of the raw material of the adhered substrate, the following polymer resins may be used. Polyethylene terephthalate and polybutylene terephthalate; polycarbonate; cycloolefin polymer; (meth)acryl resins such as polyester (meth)acrylate, epoxy (meth)acrylate, urethane (meth)acrylate, polyether (meth)acrylate, silicone (meth)acrylate and pentaerythritol tetra(meth)acrylate; the addition crosslinked silicone as similar as mentioned above; silicone such as vinyl methyl silicone (VMQ), methyl phenyl silicone (PVMQ), fluoro methyl silicone (FVMQ) and dimethyl silicone (MQ); silicone exemplified by peroxide crosslinked silicone, condensation crosslinked silicone, ultraviolet crosslinked silicone and electron beam crosslinked silicone; and a co-blended product of the above silicones and olefin are exemplified.

As the crosslinked rubber of the raw material of the adhered substrate, natural rubber, 1,4-cis butadiene rubber, isoprene rubber, polychloroprene, styrene-butadiene copolymer rubber, hydrogenated styrene-butadiene copolymer rubber, acrylonitrile-butadiene copolymer rubber, hydrogenated acrylonitrile-butadiene copolymer rubber, polybutene rubber, polyisobutylene rubber, ethylene-propylene rubber, ethylene-propylene-diene rubber, ethylene oxide-epichlorohydrin copolymer rubber, chlorinated polyethylene rubber, chlorosulfonated polyethylene rubber, alkylated chlorosulfonated-polyethylene rubber, chloroprene rubber, chlorinated acrylic rubber, brominated acrylic rubber, fluoro rubber, epichlorohydrin rubber and its copolymer rubber, chlorinated ethylene propylene rubber, chlorinated butyl rubber, brominated butyl rubber, homopolymer rubber or binary- or ternary- dimensional co- or ter- polymer rubber using such a monomer as tetrafluoroethylene, hexafluoropropylene, vinylidene fluoride and tetrafluoroethylene, ethylene/tetrafluoroethylene copolymer rubber, propylene/tetrafluoroethylene copolymer rubber, ethylene-acrylic rubber, epoxy rubber and urethane rubber are exemplified.

As the ceramics of the raw material of the adhered substrate, pottery, glass, cement, gypsum, enamel which are baked at a high temperature are included. As composition of these ceramics, elements (diamond, C), oxides (alumina, Al₂O₃), zirconia, hydroxides (hydroxyapatite), carbides (silicon carbide, SiC), carbonates, nitrides (silicon nitride), halides (fluorite) and phosphates (apatite) may be included. Specifically, barium titanates, Bi₂Sr₂Ca₂Cu₃O₁₀, high temperature superconductive ceramics, boron nitride, ferrite, lead zirconate titanate, silicon carbides, silicon nitrides, steatite (MgOSiO₂), YBa₂Cu₃O_{7-δ}, high temperature superconducting ceramics, zinc oxide, aluminum nitride (AlN), silicon carbide (SiC), silicon nitride (Si₃N₄), forsterite (2MgO·SiO₂), steatite (MgO·SiO₂), cordierite (2MgO·2Al₂O₃ · 5SiO₂), sialon (Si₃N₄ ·Al₂O₃), machinable ceramics, zircon (ZrO₂·SiO₂), barium titanate (BaTiO₃), lead zirconate titanate (Pb(Zr,Ti)O₃), ferrite (MO·Fe₂O₃) and mullite (3Al₂O₃·2SiO₂) are exemplified. The adhered substrate may have a plain face shape or a complex-solid shape such as a block shape, a plate shape, a sheet shape, a film shape, a square bar shape, a round bar shape, a sphere shape, a half-sphere shape, a fiber shape and a mesh shape. Further the raw material of the adhered substrate may include composite material such as fiber-reinforced ceramics and carbon fiber-reinforced carbon.

The oxide such as metal oxide or metalloid oxide, the sulfide and/or the nitride are included in the raw material of the adhered substrate, whereby the molecules or the particles of the oxide, the sulfide and/or the nitride may be exposed on the bonding surface thereof. In addition, the adhered substrate may have a layer on the surface of the adhered substrate. As the layer, an oxide layer such as a metal oxide layer, a metalloid oxide layer and a mixture layer made from a metal oxide-metalloid oxide; a sulfide layer such as a metal sulfide layer, a metalloid sulfide layer and a mixture layer made from a metal sulfide-metalloid sulfide layer; a nitride layer such as a metal nitride layer, a metalloid nitride layer and a mixture layer made from a metal nitride-metalloid nitride; a mixture containing layer such as a mixture of at least two of the metal oxide, the metalloid oxide, the metal sulfide, the metalloid sulfide, the metal nitride and the metalloid nitride are included. In the oxide layer, the metal oxide such as alumina, titania and zirconia are exemplified. As the metalloid oxide, silica is exemplified. The oxide layer may consist of a mixture of Al₂O₃ and SiO₂, and a mixture of ZnS and SiO₂. The metal and/or the metalloid as mentioned above may be used either alone or conjunction.

According to the bonded silicone rubber object, the oxide, the sulfide and/or the nitride is included in the adhered substrate, or the oxide layer, the sulfide layer and/or the nitride layer is deposited onto the adhered substrate. The oxide, the sulfide and/or the nitride therefore is exposed thereon. When the activation treatment such as the corona discharge treatment, the plasma treatment, the ultraviolet irradiation treatment or the excimer treatment is conducted, the new hydroxy groups as the reactive functional groups are more easily generated and amplified than without the oxide, the sulfide and the nitride. Accordingly the bonded silicone rubber object has high productivity and is exactly manufactured in large quantities even when processing simply.

Examples of the oxide, the sulfide and/or the nitride included in the adhered substrate itself may be exemplified as follows: the oxide, the sulfide and the nitride of metal such as silver, copper, iron, cobalt, silicon, lead, manganese, tungsten, tantalum, platinum, cadmium, tin, palladium, nickel, chromium, indium, titanium, zinc, calcium, barium, aluminum, magnesium, sodium, potassium the oxide, the sulfide and/or the nitride of metalloid such as silicons; a mixture of the metal nitride or the metalloid nitride and the metal oxide or the metalloid oxide (the metal or the metalloid in the nitride and the metal or the metalloid in the oxide are the same or different, respectively.); and a mixture of the metal sulfide or the metalloid sulfide and the metal oxide or the metalloid oxide (the metal or the metalloid in the sulfide and the metal or the metalloid in the oxide are the same or different, respectively.). Concretely, more preferable examples may be mentioned as follows: a SiO₂ film as a silica film, an Al₂O₃ film as an alumina film, a TiO₂ film as a titanium oxide film, a ZrO₂ film as a zirconium oxide film, a ZnS-SiO₂ film as a zinc sulfide-silica film, a SiS film and a SiS₂ film as a silicon sulfide film, an Al₂S₃ film as an aluminum sulfide film, a Ti₂S film, a TiS film, a Ti₂S₃ film, a TiS₂ film and a TiS₃ film as a titanium sulfide film, a ZrS₂ film as a zirconium sulfide film, a ZnS film as a zinc sulfide film, a Si₂N₃ film, a SiN film and a Si₃N₄ film as a silicon nitride film, an AlN film as an aluminum nitride film, a TiN film and a Ti₃N₄ film as a titanium nitride film, a ZrN film and a Zr₃N₂ film as a zirconium nitride, and a Zn₃N₂ film as a zinc nitride.

The adhered substrate having the oxide layer on the surface thereof may be the non-glass material having deposited SiO₂ (silica), deposited Al₂O₃ (alumina), deposited ZrO₂ or deposited ZnS-SiO₂. These non-glass materials are commercially available. Specifically, the non-glass material which has deposited silica or deposited alumina on the substrate made from the metal, the polymer resin, the crosslinked rubber or ceramics may be exemplified. More specifically, TECHBARRIER (trademark, available from Mitsubishi Chemical Corporation) having a silica vapor deposited film on a polyethylene terephthalate (PET) film or a polyamide film as a base film is included. TECHBARRIER VX (using the PET film as the base film) and TECHBARRIER AX (using the PET film as the base film) are exemplified. Further, IB Film (trademark, available from Dai Nippon Printing Co., Ltd.) having the silica vapor deposited film (CVD) on the PET film or the polyamide film, ECOSYAR (trademark, available from TOYOBO Co., Ltd.) having a ceramics (silica/alumina) vapor deposited film on a polyester film, ECOSYAR VE706 (trademark, available from TOYOBO Co., Ltd.) having a silica/alumina vapor deposited film on the polyester film, GL FILM (trademark, available from TOPPAN PRINTING CO., LTD.) employing PET and ONY as the base film, Transparent vapor deposited barrier film MOS (trademark, available from OIKE & Co., Ltd.) having a silica/alumina vapor deposited film and Transparent vapor deposited film FINEBARRIER (trademark, available from REIKO Co,. Ltd.) are exemplified.

When the oxide layer, the sulfide layer and the nitride layer are formed on the surface of the adhered substrate by vapor deposition, a CVD method (Chemical Vapor Deposition) and/or PE-CVD method (Plasma enhanced CVD) are employed. For example, the methods comprise the following steps: feeding source gas including a constituent of an intended thin film onto the substrate which is heated in a reactor made of quartz; and forming a deposited film through a chemical reaction on the surface of the substrate or the gaseous phase. A method using a decomposition reaction or a chemical reaction by thermal CVD-thermal and a method exciting and reacting atoms or molecules of the source gas by plasma CVD-plasma may be included. The above vapor deposition methods do not require high vacuum and is economical. According to the vapor deposition methods, a compact apparatus can be used regardless of a deposition rate and a deposition area, the high deposition rate and the large deposition area can be obtained. The vapor deposition method therefore is suitable for manufacture in large quantities and can conduct even deposition onto a convex and concave surface. In addition, the film can be selectively grown only specific part by selecting chemical species on the surface of the substrate and the fed gaseous phase.

When the oxide layer, the sulfide layer and the nitride layer are formed on the surface the adhered substrate by another vapor deposition method, a PVD method (Physical Vapor Deposition) may be employed. A thin film is formed by depositing an intended substance onto the surface of the substrate in gaseous phase through a physical method. Specifically, a
a resistive heating deposition method, an electron beam deposition method and a sputtering method are included.

The oxide layer, the sulfide layer and the nitride layer on the surface thereof may be a sputtered film, an ion plating film or a chemical vapor deposition film as the above mentioned the oxide layer, the sulfide layer and the nitride layer of the metals or the oxide layer, the sulfide layer and the nitride layer of the metalloids, besides the deposited film.

The silicone rubber substrate is preliminary formed a raw material including the silicone rubber. For example, the silicone rubber substrate is a three-dimensional silicone elastomer substrate. Specifically, the three-dimensional silicone elastomer substrate is a steric silicone elastic body produced by peroxide crosslinked silicone rubber, addition crosslinked silicone rubber, condensation crosslinked silicone rubber and electromagnetic wave crosslinked silicone rubber, and co-blended product of the silicone rubber with olefin rubber are exemplified.

The peroxide crosslinked silicone rubber, which is a raw material for the silicone rubber substrate, is not specifically restricted as far as the rubber is synthesized from a silicone raw compound and can be crosslinked by a peroxide crosslinking agent. Particularly, polydimethylsiloxane (molecular weight: 500,000 to 900,000), vinylmethylsiloxane/polydimethylsiloxane copolymer (molecular weight: 500,000 to 900,000), vinyl-terminated polydimethylsiloxane (molecular weight: 10,000 to 200,000), vinyl-terminated diphenylsiloxane/polydimethylsiloxane copolymer (molecular weight: 10,000 to 100,000), vinyl-terminated diethylsiloxane/polydimethylsiloxane copolymer (molecular weight: 10,000 to 50,000), vinyl-terminated trifluoropropylmethylsiloxane/polydimethylsiloxane copolymer (molecular weight: 10,000 to 100,000), vinyl-terminated polyphenylmethylsiloxane (molecular weight: 1,000 to 10,000), vinylmethylsiloxane/dimethylsiloxane copolymer, trimethylsiloxane group-terminated dimethylsiloxane/vinylmethylsiloxane copolymer, trimethylsiloxane group-terminated dimethylsiloxane/vinylmethylsiloxane/diphenylsiloxane copolymer, trimethylsiloxane group-terminated dimethylsiloxane/vinylmethylsiloxane/ditrifluoropropylmethylsiloxane copolymer, trimethylsiloxane group-terminated polyvinylmethylsyloxane, methacryloxypropyl group-terminated polydimethylsiloxane, acryloxypropyl group-terminated polydimethylsiloxane, (methacryloxypropyl)methylsiloxane/dimethylsiloxane copolymer, (acryloxypropyl)methylsiloxane/dimethylsiloxane copolymer can be exemplified.

As the peroxide crosslinking agent, for example, ketone peroxides, diacyl peroxides, hydroperoxides, dialkylperoxides, peroxyketals, alkylperesters, percarbonates can be exemplified. Particularly, ketoneperoxide, peroxyketal, hydroperoxide, dialkylperoxide, peroxycarbonate, peroxyester, benzoylperoxide, dicumylperoxide, dibenzoylperoxide, t-butylhydroperoxide, di-t-butylhydroperoxide, di(dicyclobenzoyl)peroxide, 2,5-dimethyl-2,5bis(t-butylperoxy)hexane, 2,5-dimethyl-2,5-bis(t-butylperoxy)hexyne, benzophenone, Michler's ketone, dimethylaminobenzoic acid ethyl ester, benzoin ethyl ether can be exemplified.

The amount to be used as the peroxide crosslinking agent can be arbitrarily determined depending on the kind of the silicone rubber to be obtained, and properties and performance of the raw material in the adhered substrate to be bonded to the silicone rubber substrate which is molded from the silicone rubber. However, as the peroxide crosslinking agent, 0.01 to 10, more preferably 0.1 to 2 parts by weight based on 100 parts by weight of the silicone rubber can be preferably used. If the amount is less than this range, crosslink density becomes too low to give desired properties as silicone rubber. On the contrary, if the amount is more than this range, crosslink density becomes too high, so that desired elasticity cannot be obtained.

The addition crosslinked silicone rubber which is a raw material for the silicone rubber substrate can be obtained by synthesis in the presence of Pt catalyst using below composition. The composition comprises vinyl group containing polysiloxanes such as vinylmethylsiloxane/polydimethylsiloxane copolymer (molecular weight: 500,000 to 900,000), vinyl-terminated polydimethylsiloxane (molecular weight: 10,000 to 200,000), vinyl-terminated diphenylsiloxane/polydimethylsiloxane copolymer (molecular weight: 10,000 to 100,000), vinyl-terminated diethylsiloxane/polydimethylsiloxane copolymer (molecular weight: 10,000 to 50,000), vinyl-terminated trifluoropropylmethylsiloxane/polydimethylsiloxane copolymer (molecular weight: 10,000 to 100,000), vinyl-terminated polyphenylmethylsiloxane (molecular weight: 1000 to 10,000), vinylmethylsiloxane/dimethylsiloxane copolymer, trimethylsiloxane group-terminated dimethylsiloxane/vinylmethylsiloxane/diphenylsiloxane copolymer, trimethylsiloxane group-terminated dimethylsiloxane/vinylmethylsiloxane/ditrifluoropropylmethylsiloxane copolymer, trimethylsiloxane group-terminated polyvinylmethylsiloxane and H group-containing polysiloxanes such as H-terminated polysiloxane (molecular weight: 500 to 100,000), methyl H siloxane/dimethylsiloxane copolymer, polymethyl H siloxane, polyethyl H siloxane, H-terminated polyphenyl(dimethyl H siloxy)siloxane, methyl H siloxane/phenylmethylsiloxane copolymer, methyl H siloxane/octylmethylsiloxane copolymer. The other composition comprises amino group-containing polysiloxanes such as aminopropyl-terminated polydimethylsiloxane, aminopropylmethylsiloxane/dimethylsiloxane copolymer, aminoethylaminoisobutylmethylsiloxane/dimethylsiloxane copolymer, aminoethylaminopropylmethoxysiloxane/dimethylsilo xane copolymer, dimethylamino-terminated polydimethylsiloxane; and epoxy group-containing polysiloxanes such as epoxypropyl-terminated polydimethylsiloxane, (epoxycyclohexylethyl)methylsiloxane/dimethylsiloxane copolymer, acid anhydride group-containing polysiloxanes such as succinic acid anhydride-terminated polydimethylsiloxane, and isocyanato group-containing compounds such as toluyldiisocyanate, 1,6-hexamethylene diisocyanate.

Processing conditions to prepare the addition crosslinked silicone rubbers from these compositions cannot be determined unambiguously because the processing conditions vary with the kinds and characteristics of addition reactions, but generally, the processes of the preparation may be have a heating process at 0 to 200°C for 10min. to 24 hours. Under these conditions, the addition crosslinked silicone rubbers can be obtained as the silicone rubber substrate. In cases where preparation is carried out at a low temperature to obtain silicone rubber having good physical properties, the reaction time may be lengthened. In cases where productivity is more emphasized rather than the physical properties, the preparation may be carried out at a higher temperature for a shorter period of time. If the preparation should be carried out within a certain period of time in compliance with the production processes or working conditions, the preparation may be carried out at a comparatively higher temperature to meet a desired period of processing time.

The condensation crosslinked silicone rubber material for the raw material of the silicone rubber substrate can be obtained by synthesis in the presence of tin catalyst or zinc catalyst using below composition. The composition is exemplified by a composition of a homocondensation component consisting of silanol group-terminated polysiloxanes such as silanol-terminated polydimethyl siloxane (molecular weight: 500 to 200,000), silanol-terminated polydiphenylsiloxane, silanol-terminated polytrifluoromethylsiloxan, silanol-terminated diphenylsiloxane/dimethylsiloxane copolymer another composition consisting of these silanol group-terminated polysiloxanes and crosslinking agents such as tetraacetoxysilane, triacetoxymethylsilane, di t-butoxydiacetoxysilane, vinyltriacetoxysilane, tetraethoxysilane, triethoxymethylsilane, bis(triethoxysilyl)ethane, tetra-n-propoxysilane, vinyltrimethoxysilane, methyltris(methylethylketoxim)silane, vinyltris(methylethylketoximino)silane, vinyltriisopropenoxysilane, triacetoxymethylsilane, tri(ethylmethyl)oximmethylsilane, bis(N-methylbenzoamido)ethoxymethylsilane, tris(cyclohexylamino)methylsilane, triacetoamidomethylsilane, tridimethylamino methylsilane; or another composition consisting of these silanol group-terminated polysiloxanes and terminal blocked polysiloxanes such as chloro-terminated polydimethylsiloxane, diacetoxymethyl-terminated polydimethylsiloxane, terminal polysiloxane.

Processing conditions to prepare the silicone rubber substrate from these compositions cannot be determined unambiguously because the processing conditions vary with the kinds and characteristics of condensation reactions, but generally, the processes of the preparation may be have a heating process at 0 to 200°C for 10 minutes to 24 hours. Under these conditions, the condensation crosslinked silicone rubbers can be obtained as the silicone rubber substrate. In cases where the preparation is carried out at a low temperature to obtain silicone rubber having good physical properties, the reaction time may be lengthened. In cases where productivity is more emphasized rather than the physical properties, the preparation may be carried out at a higher temperature for a shorter period of time. If the preparation should be carried out within a certain period of time in compliance with production processes or working conditions, the preparation may be carried out at a comparatively higher temperature to meet a desired period of processing time.

The blended rubber material for the raw material of the silicone rubber substrate comprises the silicone rubber with the olefin rubber. As the olefin rubber, 1, 4-cis-butadiene rubber, isoprene rubber, styrene-butadiene copolymer rubber, polybutene rubber, polyisobutylene rubber, ethylene-propylene rubber, ethylene-propylene-diene rubber, chlorinated ethylene-propylene rubber, chlorinated butyl rubber can be exemplified.

To the silicone rubber substrate, a functional additive can be added to enhance its functions for the silicone rubber substrate such as reinforcement, electro conductivity, thermal conductivity, abrasion resistance, ultraviolet resistance, radiation resistance, heat resistance, weatherability, flexibility and antimicrobial property. Optionally, a functional filler can be added as a bulking agent.

The surface activation treatment exemplified by the corona discharge treatment, the plasma treatment, the ultraviolet irradiation treatment and the excimer treatment is conducted to the bonding surfaces of the silicone rubber substrate and the adhered substrate made from the non-glass material. Thereby the hydroxy groups as the reactive functional groups, which are newly generated and amplified, are exposed on the bonding surfaces of the both substrates. The bonding surface of the silicone rubber substrate and the bonding surface of the adhered substrate are contacted by overlapping the both substrates and then, the both substrates are compressed through pressing and heating by using a press machine. The direct ether bonds are generated by the dehydration between the hydroxy groups as the reactive functional groups on the both substrates. The both substrates are chemically bonded, whereby the bonded silicone rubber object is produced.

The bonded silicone rubber object is employed in a contact switch which has the silicone rubber substrate having a switch key shape and the adhered substrate made from the non-glass material as a base sheet which are bonded, respectively, and an absorber for a press process in which the sheeted silicone rubber substrate and the sheeted adhered substrate are bonded.

In the bonded silicone rubber object, in order to strongly bond the silicone rubber substrate and the adhered substrate, generating the hydroxy groups as the reactive functional groups having a substantial concentration on the bonding surfaces of the both substrates, and amplifying the concentration of the reactive functional groups which react with the other hydroxy groups by using the slightly generated hydroxy groups are required. Especially, functional groups which are reacted with the organic-group-bondable hydroxy groups of the both substrates may be introduced.

In order to generate the reactive functional groups having the substantial concentration on the bonding surfaces of the silicone rubber substrate and the adhered substrate, the activation treatment such as the corona discharge treatment, the plasma treatment, the ultraviolet irradiation treatment and the excimer treatment is conducted to at least one of the silicone rubber substrate and the adhered substrate which should be bonded therebetween. The reactive groups having high reactivity, e.g. the hydroxy groups, are generated on an organic or inorganic material on the bonding surfaces. The original hydroxy groups and the newly generated hydroxy groups are exposed and scattered thereon. The bonding surfaces have the scattered hydroxy groups. Optionally, when the surface activation treatment is conducted to both of the silicone rubber substrate and the adhered substrate, organic groups or inorganic molecules generates the reactive functional groups having the high reactivity such as the hydroxy groups. The original hydroxy groups and the newly generated hydroxy groups are scattered on the bonding surfaces and exposed therein. When the both substrates come into contact each other, a siloxane compound comprising the covalent bond directly bonds the silicone rubber substrate and the adhered substrate via the ether bond. Accordingly, the bonded silicone rubber object is obtained.

When the silicone rubber substrate and the adhered substrate are bonded, the bonding surfaces thereof may be treated by the surface activation treatment such as the corona discharge treatment, the plasma treatment, the ultraviolet irradiation treatment and the excimer treatment and then, the silicone rubber substrate and the adhered substrate may be stacked under the atmospheric pressure and then, may be bonded by the covalent bond which is formed under the atmospheric pressure, reduced pressure or a pressurization condition. Approaching between the reactive functional groups such as the hydroxy groups of the both substrate is enhanced by removing gaseous media of contact boundaries under the reduced pressure condition or a vacuum condition. As the reduced pressure condition or the vacuum condition, for example, 50 torr or less, more particularly, the reduced pressure conditions of 50 to 10 torr or the vacuum conditions of less than 10 torr, more particularly, less than 10 to 1×10⁻³ torr, preferably less than 10 to 1×10⁻² torr. Alternatively, the approaching thereof may be enhanced by adding a stress (a load) of e.g. 10 to 200 kgf to the contact boundaries thereof, and further by heating the contact boundaries thereof.

As the treatment for the bonding surfaces of the silicone rubber substrate and the adhered substrate, the corona discharge treatment may be included. The corona discharge treatment is conducted under the conditions of e.g. power source: AC 100 V, output voltage: 0 to 20 kV, oscillating frequency: 0 to 40 kHz for 0.1 to 60 seconds, and temperature: 0 to 60°C by using an apparatus for an atmospheric pressure corona surface modification (trade name of CoronaMaster available from Shinko Electric & Instrumentation Co., Ltd.). The corona discharge treatment may be conducted to the face wetted with water, alcohols, acetones or esters.

The treatment which is conducted in order to activate the bonding surfaces of the silicone rubber substrate and the adhered substrate may be an atmospheric pressure plasma treatment and/or an ultraviolet irradiation treatment (a well-known UV treatment which generates ozone by an UV irradiation treatment and an excimer treatment).

The atmospheric pressure plasma treatment is conducted under conditions of e.g. plasma processing speed: 10 to 100 mm/s, power source: 200 or 220 V AC (30 A), compressed air: 0.5 MPa (1 NL/min.), and 10 kHz/300 W to 5 GHz, electric power: 100 to 400 W, and irradiation period of time: 0.1 to 60 seconds by using an air plasma generator (trade name of Aiplasma available from Panasonic Corporation).

The ultraviolet irradiation treatment is conducted under conditions of e.g. 50 to 1500 mJ/cm² of the cumulative amount of light by using an excimer rump optical source (trade name of L11751-01 available from Hamamatsu Photonics K.K.).

### Embodiments

A bonded sample of a bonded silicone rubber object of Example 1 of the present invention and adhesion samples of bonded silicone rubber objects of Comparative Examples outside the present invention were produced as follows, and properties thereof were evaluated.

### (Example 1)

KE961U (trademark, available from Shin-Etsu Chemical Co., Ltd.) as a base polymer in an amount of 100 parts by weight and C-8A (trade mark, available from Shin-Etsu Chemical Co., Ltd.) as a vulcanization agent in an amount of 0.5 parts by weight were mixed and kneaded by using two rollers. The resultant mixture was pressed and vulcanized at 170°C for 10 minutes and then, secondarily vulcanized at 200°C for 4 hours. A rubber sheet having 2 mm thickness as a silicone rubber substrate which was formed while including silicone rubber was produced. The rubber sheet was cut so as to have 60 mm × 15 mm in size.

As an adhered substrate which was made from a non-glass material and exposed an oxide on the bonding surface, a silica deposited polyethylene terephthalate (PET) film was employed. The silica deposited film was a silica deposited PET film (TECHBARRIER VX available from Mitsubishi Chemical Corporation, t = 12 µm) / a two-part curable urethane adhesive (a base agent: polyester polyol, a curable agent: an aliphatic isocyanate) / a insulation PET film (DIAFOIL available from Mitsubishi Chemical Corporation, t = 85 µm). The silica deposited PET film was cut so as to have 60 mm × 20 mm in size.

A corona discharge treatment was conducted to a bonding surface of the obtained rubber sheet by using CoronaMaster (trademark, available from Shinko Electric & Instrumentation Co., Ltd.) as a corona discharge treatment apparatus. The bonding surface thereof was activated by three times of the corona discharge treatment in conditions of 15 kV setting voltage, 0.5 mm corona treatment gap length and 100 mm/second corona speed. The corona discharge treatment was conducted to the silica deposited surface which was the bonding surface of the silica deposited PET film by using CoronaMaster. The bonding surface thereof was activated by five times of the corona discharge treatment in conditions of 15 kV setting voltage, 0.5 mm corona treatment gap length and 30 mm/second corona speed. The activated surfaces of the bonding surface of the rubber sheet and the bonding surface (the silica deposited surface) were adhered. The resultant product was compressed under conditions of at 80°C for 120 seconds and 0.1 MPa air setting pressure. Four test samples per one shot were produced as Example 1.

### (Comparative Example 1)

Four test samples per one shot were produced as Comparative Example 1 in the same manner as Example 1 except that LUMIRROR S10 (t = 100 µm) (trademark, available from Toray Industries, Inc.) without a deposited silica was employed instead of the silica deposited PET film in Example 1.

### (Comparative Example 2)

Four test samples per one shot were produced as Comparative Example 2 in the same manner as Example 1 except that LUMIRROR S10 (t = 100 µm) (trademark, available from Toray Industries, Inc.) was employed instead of the silica deposited PET film in Example 1, a silicone adhesive SE9186L RTV (available from Dow Corning Toray Co., Ltd.) was applied to a surface-activated PET film, and the sheet and the film were compressed and adhered.

### (Adhesion evaluation test: Original adhesion strength)

An adhesion evaluation test with respect to the test samples of Example 1, Comparative Examples 1 and 2 was conducted by using an adhesion evaluation measuring instrument of a digital force gauge ZP-200N (trademark, available from IMADA CO., LTD.) in conditions of 100 mm/minute tensile speed and 180 degree peeling angle. Results of the test were given by rankings according to three grade evaluation as follows. "Excellent" shows that the rubber sheet was broken and a rubber coverage rate was 100%. "Good" shows that the rubber sheet was partially peeled and the rubber coverage rate was 20 to 50%. "Poor" shows that the rubber sheet was completely peeled. The results are shown in Table 1.

### (Adhesion evaluation test: Adhesion strength after Boiling treatment test)

The test samples obtained in Example 1, Comparative Examples 1 and 2 were boiled at 98°C for 15 hours by using tap water, followed by measuring the adhesion strength in the same manner as above. The results are shown in Table 1.

### (Adhesion evaluation test: Adhesion strength after Humidity resistance test)

The test samples obtained in Example 1, Comparative Examples 1 and 2 were allowed to stand at 85°C, 85%RH and for 192 hours, followed by measuring the adhesion strength in the same manner as above. The results are shown in Table 1.

### (Table 1)

**Table 1**

| Adhesion evaluation test | Example 1 | Comparative Example 1 | Comparative Example 2 |
|---|---|---|---|
| Original adhesion strength | Excellent | Poor | Excellent |
| Adhesion strength after Boiling treatment test | Excellent | Poor | Good |
| Adhesion strength after Humidity resistance test | Excellent | Poor | Poor |

As obviously seen from Table 1, according to Example 1, when the rubber sheet including the silicone rubber as the silicone rubber substrate and the PET film having the deposited silica film on the bonding surface thereof as the adhered substrate were bonded, they were chemically and strongly bonded via a direct bond between reactive functional groups on the surface of the rubber sheet including the silicone rubber and reactive functional groups of the silica on the surface of the PET film. Example 1 therefore exhibited the extremely high any of the original adhesion strength, the adhesion strength after the boiling treatment test and the adhesion strength after the humidity resistance test. According to Comparative Example 1, when the rubber sheet including the silicone rubber and the PET film without the deposited silica were directly adhered, they were difficult to be chemically bonded. The samples of Comparative Example 1 had the very low any of the original adhesion strength, the adhesion strength after the boiling treatment test and the adhesion strength after the humidity resistance test. According to Comparative Example 2, when the rubber sheet including the silicone rubber and the PET film without the deposited silica were adhered via the silicone adhesive, the original adhesion strength was high. Unfortunately the adhesion strength of Comparative Example 2 was decreased after the boiling treatment within a short time, and was extremely fallen off after the humidity resistance test within a long time.

### Industrial Applicability

The bonded silicone rubber object of the present invention has the high adhesion strength and thus, can be utilized as products in wide fields such as an industrial product and a commodity, which require to avoid peeling, such as a tube, packing, an oil seal, a product which is adhered to metal, a diaphragm, a gasket, a large rubber roll, a rubber roll for a copying machine, a conveyor belt, a reinforcing belt, a rubber product for medical care, rubber parts for an electric or electronic part, a rubber product for architecture, a computer product, an automobile product, a bus or truck product and an aircraft product.

## Claims

1. A bonded silicone rubber object comprising:
a silicone rubber substrate which comprises and configured with silicone rubber;
an adhered substrate which comprises and configured with a non-glass material and includes an oxide, a sulfide and/or a nitride exposed on a bonding surface thereof; and
the silicone rubber substrate and the adhered substrate which are bonded by direct bonding through ether bonds between hydroxyl groups as reactive functional groups on a surface of the silicone rubber substrate and hydroxyl groups as reactive functional groups on a surface of the oxide, the sulfide and/or the nitride,
wherein the non-glass material is at least one of metal, a polymer resin and crosslinked rubber.

2. The bonded silicone rubber object according to claim 1, wherein the direct bonding between the silicone rubber substrate and the adhered substrate comprises a covalent bond.

3. The bonded silicone rubber object according to claim 1, wherein the adhered substrate has at least one of an oxide layer, a sulfide layer and a nitride layer in the surface thereof, or comprises the oxide, the sulfide and/or the nitride included in a raw material thereof.

4. The bonded silicone rubber object according to claim 3, wherein the oxide layer is at least one selected from the group consisting of a silica film, an alumina film, a titanium oxide film, a zirconium oxide film and a zinc sulfide-silica film; the sulfide layer is at least one selected from the group consisting of a silicon sulfide film, an aluminum sulfide film, a titanium sulfide film, a zirconium sulfide film and a zinc sulfide film; and the nitride layer is at least one selected from the group consisting of a silicon nitride film, an aluminum nitride film, a titanium nitride film, a zirconium nitride and a zinc nitride film.

5. The bonded silicone rubber object according to claim 3, wherein at least one of the oxide layer, the sulfide layer and the nitride layer is a vapor deposited film, a sputtered film, an ion-plated film and/or a chemical vapor-phase-deposited film.

6. The bonded silicone rubber object according to claim 1, wherein the silicone rubber is at least one of peroxide crosslinked silicone rubber, addition crosslinked silicone rubber, condensation crosslinked silicone rubber and electromagnetic wave crosslinked silicone rubber, or blended rubber of any one the silicone rubbers and olefin rubber.

7. The bonded silicone rubber object according to claim 1, wherein a bonding surface of the silicone rubber substrate and the bonding surface of the adhered substrate are at least one of a corona discharge treatment surface, a plasma treatment surface, an ultraviolet treatment surface and an excimer treatment surface, respectively.

## Patentansprüche

1. Geklebtes Silikonkautschukobjekt, umfassend:
ein Silikonkautschuksubstrat, das Silikonkautschuk umfasst und damit konfiguriert ist;
ein geklebtes Substrat, das ein Nichtglasmaterial umfasst und damit konfiguriert ist und ein Oxid, ein Sulfid und/oder ein Nitrid umfasst, das auf seiner Klebefläche exponiert ist; und
das Silikonkautschuksubstrat und das geklebte Substrat, die durch direkte Bindung über Etherbindungen zwischen Hydroxygruppen als reaktive funktionelle Gruppen auf einer Fläche des Silikonkautschuksubstrats und Hydroxygruppen als reaktive funktionelle Gruppen auf einer Fläche des Oxids, Sulfids und/oder Nitrids aneinander geklebt sind;
wobei das Nichtglasmaterial wenigstens eines aus einem Metall, einem Polymerharz und einem vernetzten Kautschuk ist.

2. Geklebtes Silikonkautschukobjekt gemäß Anspruch 1, wobei die direkte Bindung zwischen dem Silikonkautschuksubstrat und dem geklebten Substrat eine kovalente Bindung umfasst.

3. Geklebtes Silikonkautschukobjekt gemäß Anspruch 1, wobei das geklebte Substrat wenigstens eins aus einer Oxidschicht, einer Sulfidschicht und einer Nitridschicht in seiner Oberfläche aufweist oder das Oxid, Sulfid und/oder Nitrid, das in einem seiner Rohstoffe mitenthalten war, umfasst.

4. Geklebtes Silikonkautschukobjekt gemäß Anspruch 3, wobei die Oxidschicht wenigstens eine ist, die aus der Gruppe ausgewählt ist, die aus einer Siliciumoxidschicht, einer Aluminiumoxidschicht, einer Titanoxidschicht, einer Zirconiumoxidschicht und einer Zinksulfid-Siliciumoxidschicht besteht, die Sulfidschicht wenigstens eine ist, die aus der Gruppe ausgewählt ist, die aus einer Siliciumsulfidschicht, einer Aluminiumsulfidschicht, einer Titansulfidschicht, einer Zirconiumsulfidschicht und einer Zinksulfidschicht besteht, und die Nitridschicht wenigstens eine ist, die aus der Gruppe ausgewählt ist, die aus einer Siliciumnitridschicht, einer Aluminiumnitridschicht, einer Titannitridschicht, einer Zirconiumnitridschicht und einer Zinknitridschicht besteht.

5. Geklebtes Silikonkautschukobjekt gemäß Anspruch 3, wobei wenigstens eine aus der Oxidschicht, der Sulfidschicht und der Nitridschicht eine aufgedampfte Schicht, eine gesputterte Schicht, eine ionenplatierte Schicht und/oder eine chemisch aufgedampfte Schicht ist.

6. Geklebtes Silikonkautschukobjekt gemäß Anspruch 1, wobei der Silikonkautschuk wenigstens einer aus Peroxid-vernetztem Silikonkautschuk, additionsvernetztem Silikonkautschuk, kondensationsvernetztem Silikonkautschuk und durch elektromagnetische Wellen vernetztem Silikonkautschuk oder ein aus irgendwelchen Silikonkautschuken gemischter Kautschuk ist.

7. Geklebtes Silikonkautschukobjekt gemäß Anspruch 1, wobei es sich bei einer Klebefläche des Silikonkautschuksubstrats und der Klebefläche des geklebten Substrats um wenigstens eine aus einer Koronaentladungsbehandlungsoberfläche, einer Plasmabehandlungsoberfläche, einer Ultraviolettbehandlungsoberfläche bzw. einer Excimerbehandlungsoberfläche handelt.

## Revendications

1. Objet en caoutchouc de silicone collé, comprenant :
un substrat en caoutchouc de silicone, comprenant et étant configuré avec du caoutchouc de silicone,
un substrat adhéré, comprenant et étant configuré avec un matériau non vitreux, et incluant un oxyde, un sulfure et/ou un nitrure exposé sur sa surface collante, et
ledit substrat en caoutchouc de silicone et ledit substrat adhéré qui sont collés ensemble par liaison directe par liaisons éther entre des groupes hydroxy comme groupes fonctionnels réactifs sur une surface du substrat en caoutchouc de silicone et des groupes hydroxy comme groupes fonctionnels réactifs sur une surface de l'oxyde, du sulfure et/ou du nitrure,
dans lequel ledit matériau non vitreux est au moins un parmi un métal, une résine polymère et un caoutchouc réticulé.

2. Objet en caoutchouc de silicone collé selon la revendication 1, dans lequel ladite liaison directe entre le substrat en caoutchouc de silicone et le substrat adhéré comprend une liaison covalente.

3. Objet en caoutchouc de silicone collé selon la revendication 1, dans lequel ledit substrat adhéré possède au moins une parmi une couche d'oxyde, une couche de sulfure et une couche de nitrure dans sa surface, ou comprend l'oxyde, le sulfure et/ou le nitrure inclu dans un de ses matières primaires.

4. Objet en caoutchouc de silicone collé selon la revendication 3, dans lequel ladite couche d'oxyde est au moins une choisie dans le groupe consistant en une couche de silice, une couche d'alumine, une couche d'oxyde de titane, une couche d'oxyde de zirconium, et une couche de sulfure de zinc/silice, ladite couche de sulfure est au moins une choisie dans le groupe consistant en une couche de sulfure de silicium, une couche de sulfure d'aluminium, une couche de sulfure de titane, une couche de sulfure de zirconium, et une couche de sulfure de zinc, et ladite couche de nitrure est au moins une choisie dans le groupe consistant en une couche de nitrure de silicium, une couche de nitrure d'aluminium, une couche de nitrure de titane, une couche de nitrure de zirconium, et une couche de nitrure de zinc.

5. Objet en caoutchouc de silicone collé selon la revendication 3, dans lequel au moins une parmi ladite couche d'oxyde, ladite couche de sulfure et ladite couche de nitrure est une couche déposée en phase vapeur, une couche déposée par pulvérisation, une couche déposée par placage ionique, et/ou une couche déposée par dépôt chimique en phase vapeur.

6. Objet en caoutchouc de silicone collé selon la revendication 1, dans lequel ledit caoutchouc de silicone est au moins un parmi un caoutchouc de silicone vulcanisé au peroxyde, un caoutchouc de silicone vulcanisé par addition, un caoutchouc de silicone vulcanisé par condensation, et un caoutchouc de silicone vulcanisé par onde électromagnétique, ou un caoutchouc mélangé de l'un quelconque des caoutchoucs de silicone et un caoutchouc d'oléfine.

7. Objet en caoutchouc de silicone collé selon la revendication 1, dans lequel une surface collante dudit substrat en caoutchouc de silicone et la surface collante dudit substrat adhéré sont au moins une parmi une surface traitée par décharge corona, une surface traitée au plasma, une surface traitée par rayons ultraviolets, et une surface traitée à l'excimère, respectivement.
